**Europäisches Patentamt**

**European Patent Office**

**Office européen des brevets**

(19)

(11) Veröffentlichungsnummer : **0 492 611 A1**

(12) # EUROPÄISCHE PATENTANMELDUNG

(21) Anmeldenummer : **91122194.3**

(22) Anmeldetag : **23.12.91**

(51) Int. Cl.⁵ : **G01G 13/30, E01C 19/10**

(30) Priorität : **22.12.90 DE 4041641**

(43) Veröffentlichungstag der Anmeldung :
**01.07.92 Patentblatt 92/27**

(84) Benannte Vertragsstaaten :
**AT CH DE IT LI**

(71) Anmelder : **Wilhelm Schütz KG**
**Zur Quelle 6**
**W-6290 Weilburg 2 (DE)**

(72) Erfinder : **Schuld, Helmuth**
**Winkelserstrasse 4**
**W-6296 Mengerskirchen 4 (DE)**

(74) Vertreter : **Blumbach Weser Bergen Kramer**
**Zwirner Hoffmann Patentanwälte**
**Sonnenberger Strasse 100**
**W-6200 Wiesbaden 1 (DE)**

(54) **Dosier- und Abgabeeinrichtung für Mischwerke, insbesondere Asphaltmischwerke.**

(57)    Dosier- und Abgabeeinrichtung für Mischwerke, insbesondere für Asphalt, enthaltend eine Balkenwaage (1) mit einem Behälter (10) an einem Ende und einem Gewicht (20) am anderen Ende, sowie mit einem Schalter (22, 23) zur Festellung der Neigungslage des Balkens. Der Behälter (10) weist eine Klappe (11) auf, die beim Neigen des Balkens geöffnet wird, während eine Einfüllvorrichtung (40) geschlossen wird.

Fig. 1

EP 0 492 611 A1

Asphaltmischwerke weisen gewöhnlich ein Wiegegefäß auf, mit dem eine bestimmte Menge mineralischen Korns abgewogen wird, bevor dieses in den eigentlichen Mischer entladen wird, in welchen die Zugabe von erhitztem Bitumen erfolgt. Bei gewissen Asphaltsorten werden Zuschläge dem Asphalt hinzugefügt, wobei diese Zuschläge nur einen geringen prozentsatz des Gewichts des mineralischen Korns oder des Bitumens ausmachen. Bekannte Asphaltmischwerke haben gewöhnlich keine Einrichtung, um diese Zusatzstoffe zu bemessen.

Der Erfindung liegt deshalb die Aufgabe zugrunde, eine Dosier- und Abgabeeinrichtung für Mischwerke zu schaffen, die sich als Zusatz zu vorhandenen und vorbekannten Mischwerken eignet, so daß Zuschlagstoffe in geringen Mengen bemessen und dem Mischwerk zugeführt werden können.

Die neue Dosier- und Abgabeeinrichtung für Mischwerke ist im wesentlichen als Balkenwaage mit einem Behälter zur Aufnahme und Abgabe von Dosiergut ausgebildet. Oberhalb seiner Eingangsöffnung ist eine Einfüllvorrichtung angeordnet, unterhalb seiner durch eine Klappe verschließbaren Angesgangsöffnung eine Eingangsöffnung des Mischwerkes. An der Balkenwaage ist ein Schalter angebracht, der einer angeschlossenen Steuereinrichtung anzeigt, daß die in den Behälter eingefüllte Menge des Dosiergutes ein vorgegebenes Gewicht erreicht hat. Von der Steuereinrichtung sind nach Meldung des Dosiergewichtes die Einfüllvorrichtung verschließbar und die Klappe des Behälters, die an einem Antrieb angelenkt ist, betätigbar.

Die neue Dosiereinrichtung ist unempfindlich gegenüber den Vibrationen, wie sie bei Mischwerken auftreten, und trotzdem ausreichend genau. Bei einer Länge der Balkenwaage von etwa 1 m ist eine Genauigkeit von 10 bis 20 g erzielt worden. Die Dosierund Abgabeeinrichtung kann bequem entfernt werden, wenn sie an der Mischanlage nicht mehr benötigt wird.

Am ersten Hebelarm der Balkenwaage ist der Behälter mit klappe und am zweiten Hebelarm ein Gewicht angebracht, dessen Schwenkmoment so bemessen werden kann, daß der Behälter samt Inhalt bei Erreichen der gewünschten Dosiermenge im Gleichgewicht zu dem Gewicht steht.

Zur Einstellung unterschiedlicher Dosiermengen kann das Gewicht entlang einer Führung verschiebbar sein. Zusätzlich ist es möglich, das Gewicht gegen ein anderes umzutauschen oder durch Zusätzgewichte zu erhöhen.

Baulich kann die Wippe aus zwei zueinander parallelen Trägern aufgebaut sein, zwischen denen an einem Ende der Behälter und am anderen Ende das Gewicht angebracht sind.

Der Schalter kann unterhalb des zweiten Hebelarmes angeordnet sein. Zu seinem Schutz tiann ein Anschlag vorgesehen sein, der die Schwenkbewegung des Hebelarmes nach unten begrenzt. Ein weiterer Anschlag kann zur Begrenzung der Schwenkbewegung der Balkenwaage infolge erreichten Dosierinhaltes des Behälters unter dem anderen Hebelarm vorgesehen sein.

Die Einfüllvorrichtung ist vorzugsweise durch ein Schiebeelement verschließbar.

Zweckmäßigerweise ist ein Hubzylinder, der über Druckschläuche und ein elektropneumatisches Wegeventil mit einem Druckluftbehälter verbunden ist, zur Betätigung der Klappe des Behälters vorgesehen und an dem ersten Hebelarm angebracht.

Vorteilhafterweise ist der Ausgang des Behälters mit dem Einsang des Mischwerkes durch eine Schlauchrutsche verbunden, so daß das Dosiergut ohne Staubentwicklung und ohne negative Witterungseinflüsse zum Mischwerk gelangen kann.

In einer Weiterbildung kann das Mischwerk eine Schleuse mit einem Schleusenraum aufweisen, der zweckmäßigerweise von der Steuereinrichtung durch ein Schiebeelement geöffnet und geschlossen werden kann. Eine Schleuse wird in der Regel dann vorgesehen, wenn beim Öffnen des Mischwerkes keine Dämpfe oder Stäube entweichen sollen. Sie müß vorhanden sein, wenn im Inneren des Mischwerkes Überdruck herrscht.

Es kann eine Tischplatte zur Aufnahme des Schwenklagers, des Schalters und der Anschläge vorgesehen sein, so daß die Dosiereinrichtung als Ganzes aufgestellt und entfernt werden kann.

Auf einer Grundplatte unterhalb der Tischplatte können die Steuereinrichtung, das elektropneumatische Wegeventil mit dem Druckschlauch zum Druckluftbehälter und der Druckbehälter selbst angeordnet sein, so daß sie mit der Tischplatte zusammen transportabel sind.

Die Erfindung wird beispielhaft anhand der Zeichnungen beschrieben. Dabei zeigt:

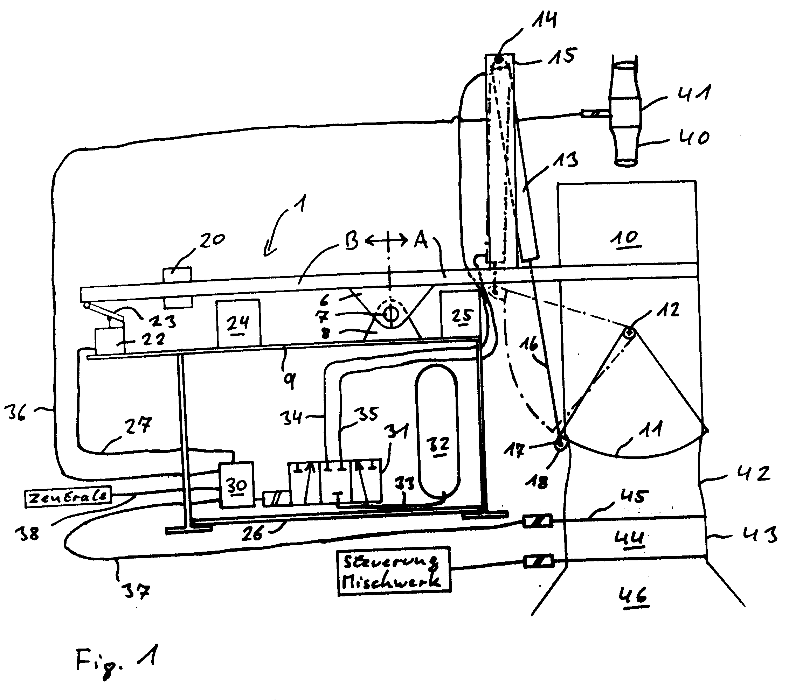

Fig. 1 eine Seitenansicht und

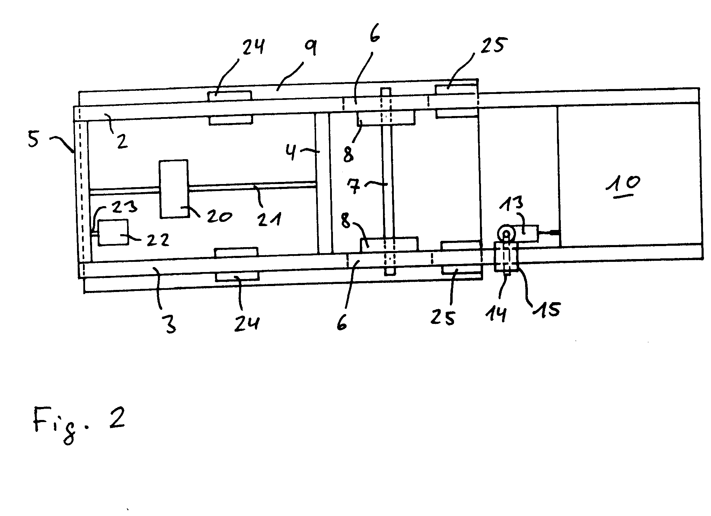

FiG. 2 eine Draufsicht von oben ohne Einfüllvorrichtung und Mischwerk.

Eine Balkenwaage 1 ist aus zwei Längsträgern 2, 3 und zwei Querträgern 4, 5 aufgebaut und enthält angeschweißte Dreieckplatten 6 mit Lageraugen, durch die sich eine Stange 7 erstreckt, die in Lagerböcken 8 abgestützt wird. Die Lagerböcke 8 sind an einer Tischplatte 9 angeschweißt. An der Tischplatte 9 sind vier Füße 28 angeordnet, die nochmals eine Grundplatte 26 tragen und auf einer Zwischenplattform des Mischwerkes 46 aufruhen.

Die Balkenwaage 1 bildet zwei Hebelarme A und B. Zwischen den Trägern 2 und 3, am äußeren Ende des Hebelarmes A, ist ein Behälter 10 befestigt, der schachtartig ausgebildet ist und an seinem unteren Ende eine Klappe 11 aufweist, die um eine Schwenkachse 12 geschwenkt werden kann. Zur Betätigung der Klappe 11 ist ein Zylinder 13 vorgesehen, der über eine Schwenkachse 14 an Trägerstangen 15 aufgehängt ist, die an dem Hebelarm A befestigt sind. Der Zylinder 13 weist eine Kolbenstange 16 auf, deren unteres Ende 17 mit einer Lasche 18 der Klappe 11 schwenkbar verbunden ist. Wenn demnach die Kolbenstange 16 ausgestreckt wird, nimmt die Klappe 11 ihre in Vollinien dargestellte, geschlossenen Lage ein, und wenn die Kolbenstange 16 eingezogen wird, wird die Klappe 11 weggeschwenkt und der Behälter 10 geöffnet (strichpunktierte Darstellung). Die Ausgangsöffnung des Behälters 10 ist durch eine Schlaüchrutsche 42 mit der als Schleuse 43 ausgebildeten Eingangsöffnung des Mischwerkes 46 verbunden.

Am zweiten Hebelarm B, zwischen den Querträgern 4 und 5, ist ein Gewicht 20 auf einer Schiene 21 verschiebbar, um über den Abstand zur Achse 7 das Gegendrehmoment zu dem vom Behälter 10 und seinem Inhalt ausgeübten Drehmoment einstellen zu können. Unterhalb des Hebelarmes B ist ein Schalter 22 angeordnet, der einen Kontaktgeber 23 aufweist. Der Schalter 22 und der Kontaktgeber 23 werden gegen Beschädigung durch den Hebelarm B mittels eines Anschlages 24 geschützt, der zwischen Tischplatte 9 und Hebelarm B wirkt. Von dem Schalter 22 führt eine Leitung 27 zur Steuereinrichtung 30. Wenn der Hebelarm B die dargestellte Lage einnimmt, ist der Schalter 22 beispielsweise geöffnet, wenn ,jedoch der Hebelarm B nach oben schwenKt und sich vom Kontaktgeber 23 entfernt, wird der Schalter 22 geschlossen und ein Signal abgegeben, welches anzeigt, daß der Behälter 10 die vorgesehene Losiermenge aufgenommen hat. Damit in diesem Fall der Hebelarm A nicht nach unten wegschwenkt, ist ein weiterer Anschlag 25 vorgesehen, der mit der Tischplatte 9 zusammenarbeitet und den Schwenkwinkel des Hebelarmes A nach unten begrenzt. Die beiden Anschläge 24 und 25 sind als Gummipuffer ausgebildet und auf der Tischplatte 9 angebracht. Auf der Grundplatte 26 unterhalb der Tischplatte 9 befinden sich die Steuereinrichtung 30, das elektropneumatische Wegeventil 31 mit dem Druckschlauch 33 zum Druckluftbehälter 32 sowie der Druckluftbehälter 32 selbst.

Von dem Wegeventil 31 führt eine erste Arbeitsleitung 34 zum oberen Ende des Zylinders 13 und eine zweite Arbeitsleitung 35 zu seinem unteren Ende, so daß die Kolbenstange 16 in dem Zylinder 13 hin- und herbewegt werden kann.

Von der Steuereinrichtung 30 führt eine Leitung 36 zum Vorratsbehälter mit Einfüllvorrichtung 40, die durch ein Schiebeelement 41 verschließbar ist. Eine weitere Leitung 37 führt von der Steuereinrichtung 30 zur Schleuse 43 des Mischwerks 46. Die Schleuse 43 weist einen Schleusenraum 44 auf, der durch ein Schiebeelement 45 zu öffnen und zu schließen ist. Das Schiebeelement 45 ist durch die Steuereinrichtung 30 betätigbar. Eine Leitung 38 führt von der Steuereinrichtung 30 zur Zentrale, in der die Arbeitszustände der Dosier- und Abgabeeinrichtung angezeigt werden.

Der Betrieb der Dosiereinrichtung geht wie folgt vor sich:

Zur Vorbereitung gibt man ein Gewicht entsprechend der gewünschten Dosiermenge in den Behälter 10 und verschiebt das Gewicht 20 so lange, bis die Balkenwaage im Gleichgewicht ist. Danach entfernt man das Gewicht und verbindet die Dosiereinrichtnng mit dem Mischwerk über die Schlauchrutsche 42.

Zur gegebenen Zeit wird die Steuereinrichtung 30 von der Zentrale angesteuert, um einen Wäge- und Dosierzyklus zu starten. Hierzu wird die Einfüllvorrichtung 40 in die Öffnungsstellung gesteuert (Leitung 36). Nunmehr fällt das zu dosierende Gut nach und nach in den Behälter 10. Wenn Gleichgewicht in der Balkenwaage erreicht ist, wird der Kontaktgeber 23 ein wenig angehoben, und der Schalter 22 spricht an. Dieses Signal wird an die Steuereinrichtung 30 über die Leitung 27 weitergegeben. Das Schiebeelement 41 der Einfüllvorrichtung 40 wird nun von der Steuereinrichtung 30 über die Leitung 36 geschlossen. Anschließend wird der Schleusenraum 44 der Schleuse 43 zum Mischwerk 46 von der Steuereinrichtung 30 geöffnet. Daraufhin wird der Zylinder 13 aus der ausgestreckten in die eingezogene Stellung verfahren, wobei eine leichte Schwenkbewegung um die Achse 14 erfolgt. Die Klappe 11 wird geöffnet, und das eingefüllte Gut fällt durch die Schlauchrutsche 42 in die Schleuse 43 des Mischwerkes 46. Nach einem vorgegebenen Zeitintervall wird von der Steuereinrichtung 30 die Klappe 11 des Behälters 10 und die Schleuse 43 des Mischwerkes 46 geschlossen.

Werden keine hohen Anforderungen an die Dichtigkeit des Mischwerkes während der Abgabe des Dosiergutes gestellt, kann auf das Schiebeelement 45 verzichtet werden, so daß durch die Klappe 11, die Schlauchrutsche 42 und die Eingangsklappe zum Mischwerk eine "Einfach"-Schleuse entsteht.

Es ist nicht notwendig, die Ausgangsöffnung des Behälters direkt oberhalb der Eingangsöffnung des Mischwerkes anzuordnen. Es kann durchaus ein horizontaler Abstand vorhanden sein, der z.B. durch die Schlauchrutsche überbrückt wird.

Im Rahmen dieser Erfindung sind auch andere Ausführungen und Anordnungen der Öffnungs- und Schließmechanismen sowie ihrer Betätigungsvorrichtungen möglich, indem z.B. Blendenverschlüsse oder hydraulische Betätigungsvorrichtungen gewählt werden.

**Patentansprüche**

1. Dosier- und Abgabeeinrichtung für Mischwerke, insbesondere Asphaltmischwerke, mit folgenden Merkmalen:

   eine Balkenwaage (1) weist einen Behälter (10) mit einer Eingangsöffnung, über der eine Einfüllvorrichtung (40) angeordnet ist, und einer Ausgangsöffnung auf, die mit einer Klappe (11) verschließbar und oberhalb einer Eingangsöffnung des Mischwerks (46) angeordnet ist;

   ein Schalter (22, 23) ist zur Balkenwaage (1) so angeordnet, daß er einer Steuereinrichtung (30) durch ein Signal angibt, daß die in den Behälter (10) eingefüllte Menge des Dosiergutes ein vorgegebenes Dosiergewicht erreicht hat;

   die Einfüllvorrichtung (40) ist von der Steuereinrichtung (30) bei Meldung des Dosiergewichts verschließbar;

   die Klappe (11) ist an einem Antrieb (13, 31, 32, 33) angelenkt, der von der Steuereinrichtung (30) nach verschließen der Einfüllvorrichtung (40) betätigbar ist.

2. Dosier- und Abgabeeinrichtung nach Anspruch 1, dadurch gekennzeichnet,
   daß die Balkenwaage (1) einen ersten Hebelarm (A) mit dem Behälter (10) und einen zweiten Hebelarm (B) mit einem entlang einer Führung (21) verschiebbaren Gewicht 120) aufweist.

3. Dosier- und Abgabeeinrichtung nach Anspruch 2, dadurch gekennzeichnet,
   daß die Balkenwaage (1) ein Schwenklager (6, 7, 8) und zwei parallele Träger (2, 3) umfaßt, zwischen denen auf der einen Seite des Schwenklagers (6, 7, 8) der Behälter (10) und auf der anderen Seite eine Führung (21) für das Gewicht (20) angebracht sind.

4. Dosier- und Abgabeeinrichtung nach Anspruch 3, dadurch gekennzeichnet,
   daß der Schalter (22, 23) unterhalb des zweiten Hebelarms (B) angeordnet ist.

5. Dosier- und Abgabeeinrichtung nach Anspruch 4, dadurch gekennzeichnet,
   daß dem Schalter (22, 23) ein Anschlag (24) zur Begrenzung der Schwenkbewegung der Balkenwaage (1) in Richtung auf den Schalter zugeordnet ist.

6. Dosier- und Abgabeeinrichtung nach Anspruch 5, dadurch gekennzeichnet,
   daß ein weiterer Anschlag (25) unterhalb des ersten Hebelarms (A) zur Begrenzung der Schwenkbewegung der Balkenwaage (1) infolge erreichten Dosierpewichtes des Behälters (10) vorgesehen ist.

7. Dosier- und Abgabeeinrichtung nach den Ansprüchen 1 bis 6, dadurch gekennzeichnet, daß die Einfüllvorrichtung (40) durch ein Schiebeelement (41) verschließbar ist.

8. Dosier- und Abgabeeinrichtung nach den Ansprüchen 1 bis 6, dadurch gekennzeichnet, daß der Antrieb zum Öffnen und Schließen der Klappe (11) ein elektropneumatisches Wegeventil (31), einen Druckluftbehälter (32), Druckluftschläuche (33, 34, 35) und einen Druckluftzylinder (13) umfaßt.

9. Dosier- und Abgabeeinrichtung nach den Ansprüchen 1 bis 6, dadurch gekennzeichnet, daß die Ausgangsöffnung des Behälters (10) mit der Eingangsöffnung des Mischwerkes (46) durch eine Schlauchrutsche (42) verbunden ist.

10. Dosier- und Abgabeeinrichtung nach den Ansprüchen 1 bis 9, dadurch gekennzeichnet, daß die Eingangsöffnung des Mischwerkes (46) als Schleuse (43) mit einem Schleusenraum (44) ausgebildet ist, der von der Steuereinrichtung (30) durch ein Schiebeelement (45) zu öffnen und zu schließen ist.

11. Dosier- und Abgabeeinrichtung nach den Ansprüchen 1 bis 10, dadurch gekennzeichnet, daß eine Tischplatte (9) zur Aufnahme des Schwenklagers (6, 7, 8), des Schalters (22, 23) und der Anschläge (24, 25) vorgesehen ist.

12. Dosier- und Abgabeeinrichtung nach den Ansprüchen 1 bis 11, dadurch gekennzeichnet, daß auf einer Grundplatte (26) unterhalb der Tischplatte (9) die Steuereinrichtung (30), das elektropneumatische Wegeventil (31), der Druckschlauch (33) und der Druckluftbehälter (32) angeordnet sind.

Fig. 1

Steuerung & Mischwerk

Zentrale

Fig. 2

**Europäisches Patentamt**

# EUROPÄISCHER RECHERCHENBERICHT

Nummer der Anmeldung

EP 91 12 2194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 124 206 (BURKE) * Spalte 1, Zeilen 9-39; Spalte 3, Zeile 74 - Spalte 5, Zeile 52; Spalte 6, Zeile 56 - Spalte 7, Zeile 25; Figur 1 * | 1,7,8 | G 01 G 13/30 E 01 C 19/10 |
| A | --- | 5 | |
| A | DE-C- 531 329 (PASQUIER) * insgesamt * --- | 1,4 | |
| A | US-A-3 117 639 (DREEBEN) * Spalte 2, Zeile 65 - Spalte 4, Zeile 59; Figuren 1,2 * --- | 1-3,5,6 | |
| A | DE-C- 363 389 (D. DE CLERCQ) * Seite 1, Zeile 1 - Seite 2, Zeile 64; Seite 2, Zeile 99 - Seite 3, Zeile 62; Seite 3, Zeilen 84-94; Figuren 1,2 * ----- | 1-4,11, 12 | |

| | RECHERCHIERTE SACHGEBIETE (Int. Cl.5) |
|---|---|
| | G 01 G 13/00 B 01 F 15/00 E 01 C 19/10 |

Der vorliegende Recherchenbericht wurde für alle Patentansprüche erstellt

| Recherchenort | Abschlußdatum der Recherche | Prüfer |
|---|---|---|
| BERLIN | 20-03-1992 | BEITNER M.J.J.B. |

EPO FORM 1503 03.82 (P0403)